# EUROPEAN PATENT APPLICATION

(11) **EP 4 730 627 A1**
(43) Date of publication of application: **22.04.2026**
(21) Application number: 24207539.8
(22) Date of filing: 18.10.2024
(51) Int. Cl.: H02M 1/00, H02M 7/5387, H02M 7/797

(54) **METHOD AND SYSTEM FOR CONTROLLING OPERATION OF POWER CONVERTER**

(71) Applicant: Volvo Penta Corporation, 405 08 Göteborg (SE)
(72) Inventor: Kersten, Anton, 433 42 Partille (SE); Carlsson, Lars-Gunnar, 423 39 Torslanda (SE); Mirbagheri, Mina, 417 60 Göteborg (SE); Skoglund, Martin, 418 71 Göteborg (SE); Vekas, Kristian, 429 34 Kullavik (SE); Lindkvist, Erik, 435 35 Mölnlycke (SE); Sjöstedt, Nina, 41708 Göteborg (SE); Strängberg, Victor, 417 08 Göteborg (SE)
(74) Representative: Valea AB

(57) **Abstract**

Method and system for controlling operation of a power converter (620) comprised in an energy storage system (600) are provided. The operation of the power converter (620) is activated and deactivated, by a processing circuitry of a computer system, at a predefined controlling frequency with a duty cycle. The predefined controlling frequency is lower than switching frequency of the power converter (620) when in active operation.

## Description

### TECHNICAL FIELD

The disclosure relates generally to power electronics. In particular aspects, the disclosure relates to a computer-implemented method and computer system for controlling operation of a power converter comprised in an electrical energy storage system. The disclosure can be applied to grid connected electrical energy storage system, heavy-duty vehicles, such as trucks, buses, and construction equipment, among other vehicle types. Although the disclosure may be described with respect to a particular vehicle, the disclosure is not restricted to any particular vehicle.

### BACKGROUND

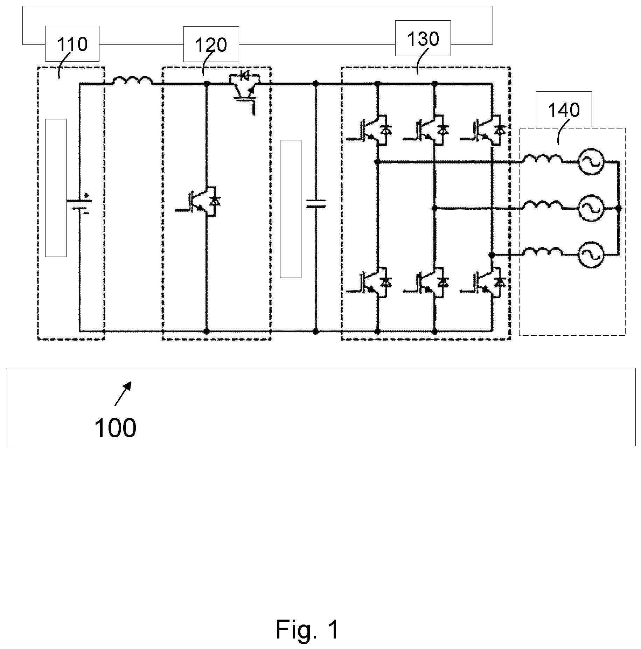

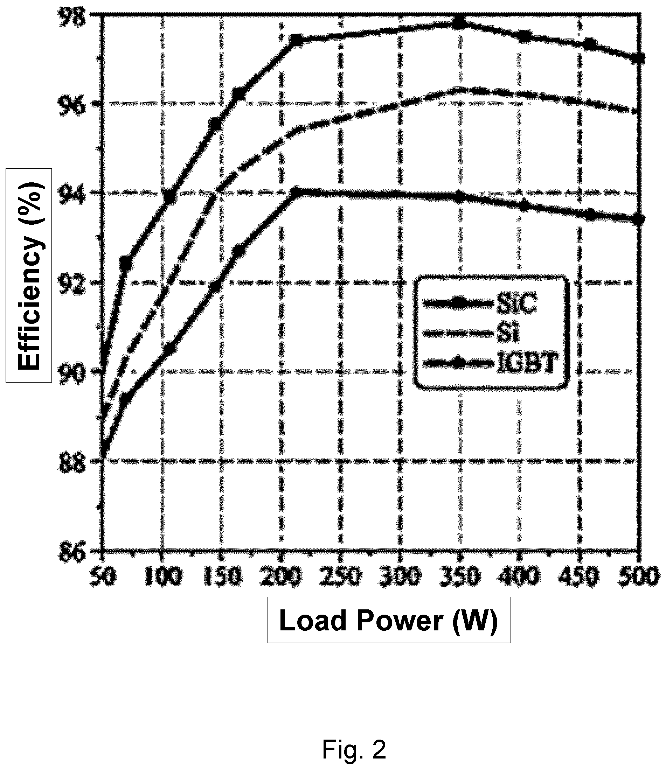

In a grid connected electrical energy storage system (EES), power conversion system comprising one or more power electronic stages, e.g. direct current (DC) to DC converters, DC to alternating current (AC) inverters, AC to DC inverters are used to handle bidirectional flow of power, allowing for both charging from the grid to the ESS and discharging from the ESS to the grid. **Fig. 1** shows an example of EES **100** which comprises a battery pack **110,** a boost DC/DC converter **120** and a three-phase DC/AC inverter **130** connected to a grid **140.** The DC/DC converter 120 and DC/AC inverter 130 may be implemented using Insulated Gate Bipolar Transistors (IGBTs). Transformers and inductors may also be used in EES. The system efficiency of an EES is the product of the inverter stages, inductor and transformer stages which is typically very poor at partial load efficiency due to poor efficiency of inverter stages, inductor and transformer stages. **Fig. 2** shows examples of efficiency curves for inverters implemented with IGBTs, Silicon Carbide (Sic) and Silicon (Si) Metal-Oxide-Semiconductor Field-Effect Transistors (MOSEFTs). The x-axis in Fig. 2 represents load power measured in Watt (W) and the y-axis represents efficiency measured in percentage (%). As shown in Fig.2, the inverters typically have a bend efficiency curve. That means they have a very poor efficiency at partial load operation, i.e. when the ESS is operating at less than its full capacity or designed load.

### SUMMARY

According to a first aspect of the disclosure, a computer system comprising processing circuitry configured to control operation of a power converter comprised in an energy storage system is provided. The processing circuitry is configured to trigger activation and deactivation of the operation of the power converter periodically at a predefined controlling frequency with a duty cycle. The predefined controlling frequency is lower than switching frequency of the power converter when in active operation. The first aspect of the disclosure may seek to improve the efficiency of the power converter and thus the energy storage system efficiency. A technical benefit may include improving the efficiency and lifetime of the energy storage system, especially when the energy storage system is at partial load operation.

Optionally in some examples, including in at least one preferred example, the processing circuitry may be configured to trigger activation and deactivation of the operation of the power converter during at least one of discharging and charging period of a power source comprised in the energy storage system. A technical benefit may include improving the efficiency and lifetime of the energy storage system during discharging and charging period.

Optionally in some examples, including in at least one preferred example, the processing circuitry may be configured to trigger turning on and off the power of the power converter to activate and deactivate the operation of the power converter. A technical benefit may include improving the efficiency and lifetime of the energy storage system by deactivating the operation of the power converter periodically.

Optionally in some examples, including in at least one preferred example, the processing circuitry may be configured to trigger switching off all transistors comprised in the power converter to deactivate the operation of the power converter. A technical benefit may include improving the efficiency and lifetime of the energy storage system by switching off all transistors comprised in the power converter periodically.

Optionally in some examples, including in at least one preferred example, the predefined controlling frequency may be lower than the frequency of the Pulse Width Modulation (PWM) or Space Vector Modulation, or the duty cycle of the predefined controlling frequency may be larger than the duty cycle of the Pulse Width Modulation (PWM) or Space Vector Modulation. A technical benefit may include improving the efficiency and lifetime of the energy storage system while not influencing normal operating conditions of the power converter.

Optionally in some examples, including in at least one preferred example, the predefined controlling frequency may be defined to achieve in average a desired operating power of the power converter when the energy storage system is at partial load operation. A technical benefit may include improving the efficiency and lifetime of the energy storage system when the energy storage system is at partial load operation.

Optionally in some examples, including in at least one preferred example, at least one of a pattern to activate and deactivate the operation of the power converter, the controlling frequency and a duty cycle may be varied depending on a desired average operating power of the power converter. A technical benefit may include improving the efficiency and lifetime of the energy storage system by varying any one or a combination of the activating and deactivating pattern, the controlling frequency and duty cycle.

Optionally in some examples, including in at least one preferred example, the predefined controlling frequency may be defined based on application of the power converter. A technical benefit may include improving the efficiency and lifetime of the energy storage system by defining an appropriate controlling frequency to activate and deactivate the power converter based on different applications of the power converter.

According to a second aspect of the disclosure, a computer-implemented method for controlling operation of a power converter comprised in an energy storage system is provided. The method comprises activating and deactivating, by a processing circuitry of a computer system, the operation of the power converter periodically at a predefined controlling frequency with a duty cycle. The predefined controlling frequency is lower than switching frequency of the power converter when in active operation. The second aspect of the disclosure may seek to improve the efficiency of the power converter. A technical benefit may include improving the efficiency and lifetime of the energy storage system during both charging and discharging period, especially when the energy storage system is at partial load operation.

Optionally in some examples, including in at least one preferred example, the method comprises turning off the power of the power converter to deactivate the operation of the power converter. A technical benefit may include improving the efficiency and lifetime of the energy storage system by deactivating the operation of the power converter periodically.

Optionally in some examples, including in at least one preferred example, the method comprises switching off all transistors comprised in the power converter to deactivate the operation of the power converter. A technical benefit may include improving the efficiency and lifetime of the energy storage system by switching off all transistors comprised in the power converter periodically.

Optionally in some examples, including in at least one preferred example, the method comprises activating and deactivating the operation of the power converter during at least one of discharging and charging period of a power source comprised in the energy storage system. A technical benefit may include improving the efficiency and lifetime of the energy storage system during discharging and charging period.

Optionally in some examples, including in at least one preferred example, the method comprises varying at least one of a pattern to activate and deactivate the operation of the power converter, the controlling frequency and a duty cycle depending on a desired average operating power of the power converter. A technical benefit may include improving the efficiency and lifetime of the energy storage system by varying any one or a combination of the activating and deactivating pattern, the controlling frequency and duty cycle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary power converter according to an example.
**FIG. 2** are exemplary efficiency curves according to some examples.
**FIG. 3** is a schematic diagram illustrating an exemplary operation pattern of a power converter according to an example.
**FIG. 4** are exemplary efficacy curves of some example inverters.
**FIG. 5** is a schematic diagram illustrating battery power when operating the power converter according to the operation pattern shown in FIG.3.
**FIG. 6a** is a schematic block diagram illustrating an exemplary power converter in which method for controlling its operation may be implemented.
**FIG. 6b** is a schematic block diagram illustrating an example activating and deactivating pattern of a power converter.
**FIG. 7** is a flow chart illustrating a method for controlling the operation of the power converter according to an example.
**FIG. 8** is a schematic diagram of an exemplary computer system for implementing examples disclosed herein, according to an example.
**FIG. 9** is a schematic block diagram showing an exemplary vehicle.

### DETAILED DESCRIPTION

The detailed description set forth below provides information and examples of the disclosed technology with sufficient detail to enable those skilled in the art to practice the disclosure.

In ESS, charging and discharging processes play a critical role in maintaining power balance, particularly when dealing with partial load conditions. During charging, energy from an external source like the grid, renewable energy sources, or generators, is stored in the ESS, typically batteries. When an ESS is charged under partial load conditions, the charging current is less than the system's full charging capacity. This may occur when the energy source provides less power than the ESS can absorb, or the ESS limits the charging power to prevent overcharging or overheating, or the battery state of charge (SoC) approaches full capacity, causing the charging power to taper off. During discharging, the ESS supplies power to the load, either directly to the grid or to an isolated system. When the load demand is less than the ESS's maximum discharge capacity, the system operates under partial load conditions. The ESS discharges less current to match the load demand. When charging and discharging are conducted at partial load condition, inverter efficiency is very poor. As discussed in the background, the system efficiency of an EES is the product of the inverter stages, inductor and transformer stages. To improve the system efficiency, the efficiency of the inverter stage must be improved.

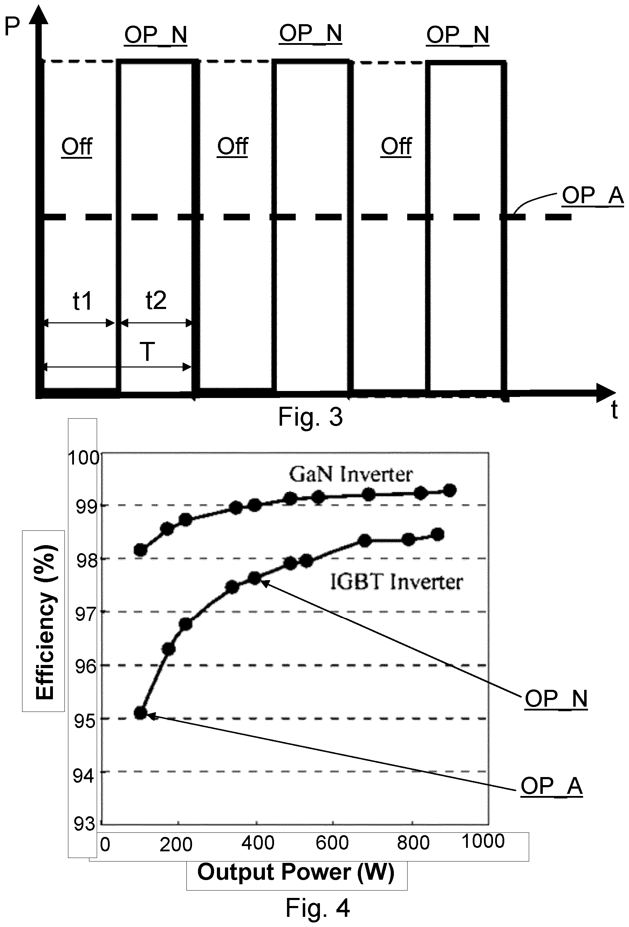

To improve the efficiency of an inverter stage, the inverter stage may be switched on and off at a certain frequency with a certain duty cycle, i.e. the operation of the inverter stage may be activated and deactivated periodically at a certain frequency with a certain duty cycle. **Fig. 3** shows an activating and deactivating pattern of an inverter stage according to an example. The x-axis in Fig. 3 represents time (t) and the y-axis represents output power level. As shown in Fig.3, the inverter stage is deactivated during a first time **t1** and activated during a second time **t2** in a period of **T.** The inverter stage is activated and deactivated periodically. The controlling frequency for activating and deactivating the inverter stage is **1/T** and the duty cycle is **D=t2/T.** During off-period, the inverter stage is not operating and no output power from the inverter stage, during on-period, the inverter stage is operating at an output power level **OP_N** such that in average a desired output power level is achieved, shown as an actual output power level **OP_A** in Fig.3. Normally, the inverter stage operates all the time without interruption. The desired average output power level is the output power level when the inverter stage is operating without interruption. For example, if the inverter stage is operating normally without interruption during a total period **T1** with output power of OP_A at partial load efficiency, then a higher output power OP_N at higher efficiency may be chosen and the inverter stage is operating at this power level with a duty cycle D. The total output power during the total period T1 is OP_N*D*T1 and the output power in average is OP_N*D which should reach OP_A. Then D=OP_A/OP_N. The inverter stage is operating at OP_N with an increased efficiency compared to when operating continuously at OP_A.

Fig.3 is just one example activating and deactivating pattern. Multiple activating and deactivating patterns and duty rations or cycles are possible for controlling the operation of inverter stage depending on applications. That is, at least one of a pattern to activate and deactivate the operation of the inverter stage, the controlling frequency and a duty cycle may be varied depending on a desired average operating power of the inverter stage. For example, the duty cycle D may be dynamically changed or kept constant.

**Fig.4** shows efficiency curves of an inverter stage implemented with IGBTs and Gallium Nitride (GaN) transistors. The x-axis in Fig. 4 represents output power measured in Watt (W) and the y-axis represents efficiency measured in percentage (%). As can be seen from Fig. 4, when the inverter stage is operating at output power level OP-N during on-period, it has higher efficiency than when it is operating normally at output power level OP_A. So, the efficiency of the inverter stage is improved by controlling the operation of the inverter stage such that the inverter stage is operating periodically or intermittently at a higher power level than the power level when it is operating normally.

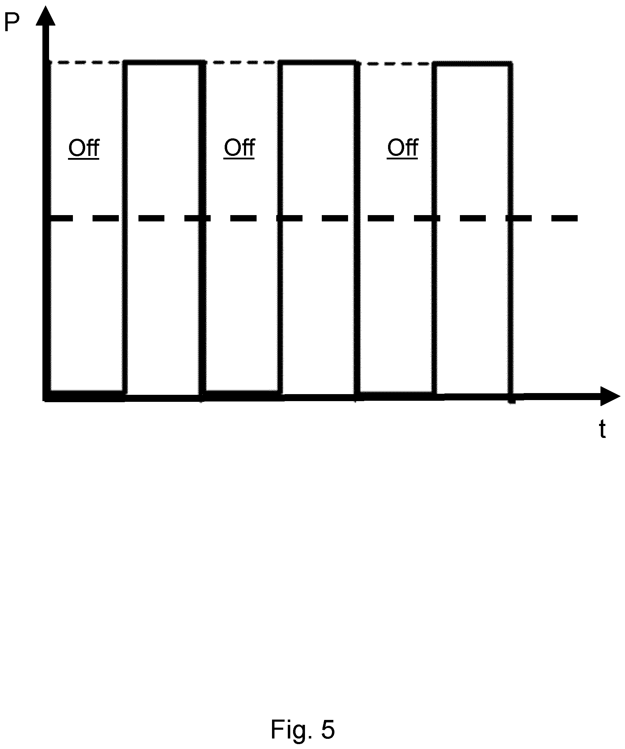

**Fig. 5** shows a pattern of power drawn from a battery when an inverter stage is operating intermittently. As shown in Fig. 5, the power drawn from the battery is also pulsed, which can significantly increase the battery lifetime.

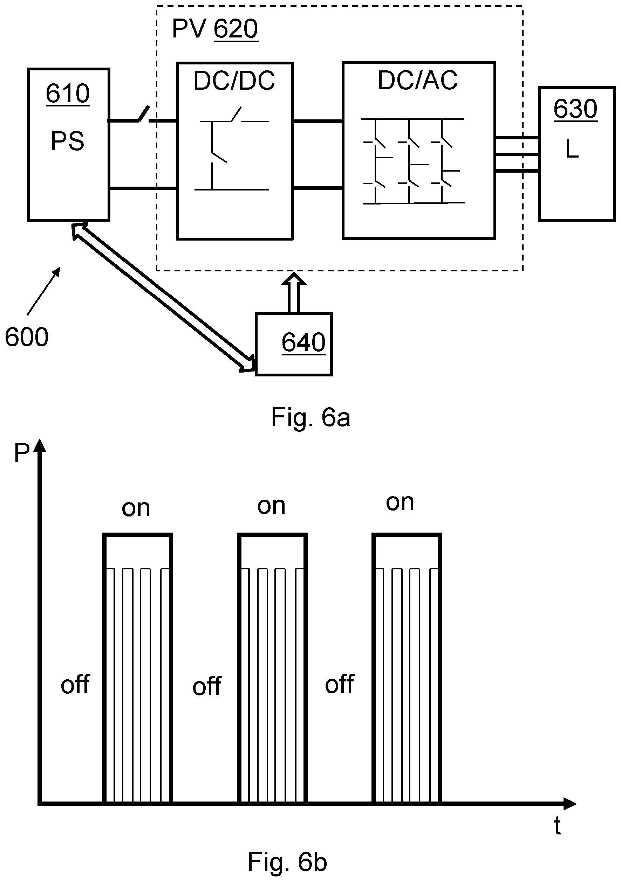

**Fig.6a** shows an ESS **600** where the method for controlling operation of a power converter comprised in the ESS 600 may be implemented. The ESS 600 comprises a power source **610,** e.g. a battery pack, a capacitor etc., a power converter **620** which may comprise any one or a combination of a DC/DC converter, a DC/AC inverter, an AC/DC inverter. Power converter 620 supplies power to a load **630,** e.g. a grid, an isolated power system, a motor in e.g. a vehicle etc. The ESS 600 may comprise a control circuitry **640** for controlling operation of the power converter 620, charging and discharging process etc.

For easy understanding the method for controlling the operation of the power converter 620, the working mechanism of a DC/AC inverter in normal operation will be described first. One of the critical aspects of DC/AC operation is the switching frequency, which refers to how quickly the electronic switches in the inverter such as IGBTs or MOSFETs are turned on and off to generate an AC waveform. The switching frequency is the rate at which the inverter's switching elements e.g., IGBTs or MOSFETs, toggle between their "on" and "off" states. Typical switching frequency for low-frequency inverters is around 50-60Hz matching the frequency of the AC grid. Typical switching frequency for high-frequency inverters is in the range of 20 kHz to several hundred kHz. The switching frequency determines how smoothly the inverter can replicate the desired AC waveform, e.g. a sine wave. In a DC/AC inverter, the DC input is switched on and off rapidly to create a pulsating output, which is then filtered to resemble an AC waveform. The switches are usually controlled using Pulse Width Modulation (PWM) or Space Vector Modulation, where the width of the pulses is varied to approximate a sinusoidal waveform.

As discussed above, to improve efficiency, the DC/AC inverter may be activated and deactivated periodically at a controlling frequency with a certain duty cycle. The controlling frequency is lower than the switching frequency of the DC/AC when it is in active operation. That is the controlling frequency is lower than the frequency of PWM or Space Vector Modulation during active period when DC/AC inverter is in normal operation and the inverter's switching elements toggle between their "on" and "off" states. **Fig. 6b** shows an activating and deactivating pattern of the DC/AC inverter at a controlling frequency with a certain duty cycle, shown by thick lines, in relation to the switching pattern of the switching elements when it is in active operation, shown by thin lines. It can be seen that the controlling frequency is lower than the switching frequency in order not to influence or disturb normal operating conditions of the inverter while improving the efficiency.

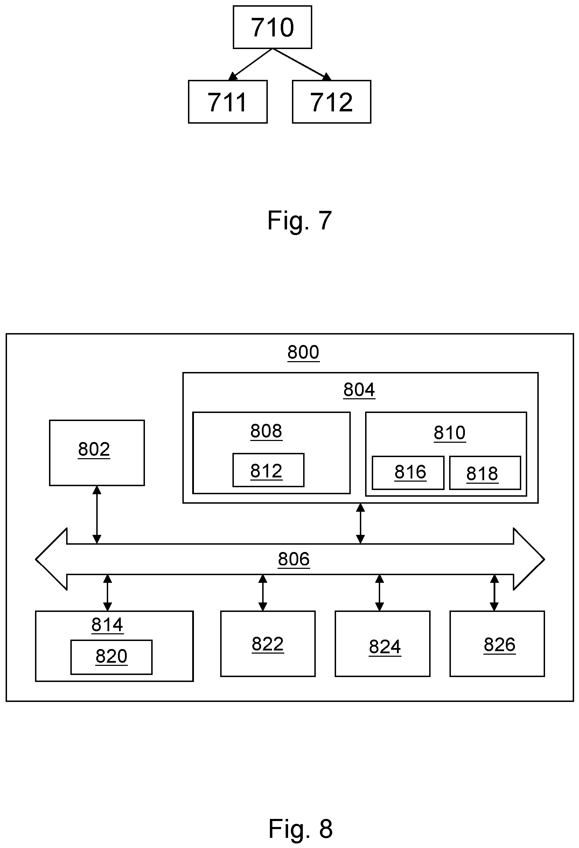

A computer-implemented method for controlling the operation of the power converter 620 will be described with reference to **Fig.7****.** The method may be implemented in a computer system comprising a processing circuitry. The computer system may be implemented or included in the control circuitry 640 comprised in the ESS 600. The method comprises the following actions:

### Action 710

Activating and deactivating, by e.g. the processing circuitry being configured to, the operation of the power converter 620 periodically at a predefined controlling frequency **Cf with** a duty cycle **D.** The predefined controlling frequency Cf is lower than switching frequency of the power converter 620 when in active operation. The predefined controlling frequency Cf may be defined to achieve in average a desired operating power of the power converter 620 such that system efficiency is improved when the energy storage system 600 is at partial load operation. The predefined controlling frequency Cf may be defined based on application of the power converter 620. The predefined controlling frequency may be in at least one of these ranges: 0.001 Hz-40Hz, 0.001 Hz-2000 Hz, 2 KHz-5 KHz, 5 KHz-20 KHz. By defining an appropriate controlling frequency to activate and deactivate the power converter 620 based on different applications of the power converter 620, the efficiency and lifetime of the energy storage system may be improved. For example, the predefined controlling frequency may be between 0.001 Hz-30 Hz for low-frequency inverters, 0.001 Hz-2 kHz for high-frequency inverters, 5 kHz or higher for inverters in vehicle applications.

To improve the efficiency and lifetime of the energy storage system during discharging and charging period, especially when the energy storage system 600 is at partial load operation, activating and deactivating the operation of the power converter 620 may be performed during at least one of discharging and charging period of the power source 610 comprised in the energy storage system 600. Specially, activating and deactivating the operation of the power converter 620 may be performed when the energy storage system 600 is at partial load operation during discharging or charging period.

Activating and deactivating the operation of the power converter 620 in Action 710 may comprise the following actions.

### Action 711

Deactivating, by e.g. the processing circuitry being configured to, the power converter 620 during a first time period t1.

The power converter 620 may be deactivated by turning off the power of the power converter. For example, the power converter 620 may be disconnected from the power source 610. The power converter 620 may be deactivated by putting all switching elements in the power converter 620 to "off" states, i.e. switching off all transistors in the power converter 620 by e.g. applying 0 voltage to the gates of all transistors. Then no power is output from the power converter 620 to the load 630 or no power is transferred from load 630 to the power source 610. Deactivating the power converter 620 may comprise sending information or signal from the processing circuitry to the power converter 620 to trigger the power converter 620 to change its operation from activated to deactivated, e.g. trigger switching off all transistors in the power converter 620 or turning off the power of the power converter 620.

### Action 712

Activating, by e.g. the processing circuitry being configured to, the power converter 620 during a second time period t2. During an active period, the power converter 620 is operating to output power to the load 630, i.e. discharging, or transfer power from the load 630 to power source 610, i.e. charging, and the switching elements are controlled to be on and off at the switching frequency of PWM or Space Vector Modulation. Activating the power converter 620 may comprise sending information or signal from the processing circuitry to the power converter 620 to trigger the power converter 620 to change its operation from deactivated to activated, e.g. operating its switching element according to its normal operating scheme.

**FIG. 8** is a schematic diagram of a computer system **800** for implementing examples disclosed herein. The computer system **800** is adapted to execute instructions from a computer-readable medium to perform these and/or any of the functions or processing described herein. The computer system 800 is configured to, by a processing circuitry **802** being configured to, control operation of a power converter 620 comprised in an energy storage system 600. The processing circuitry **802** may be implemented in the control circuitry 640 as shown in Fig. 6a or may be implemented separately but interact with the control circuitry 640 for controlling the operation of the power converter 620.

The processing circuitry 802 is configured to trigger activation and deactivation of the operation of the power converter 620 periodically at a predefined controlling frequency with a duty cycle. The predefined controlling frequency is lower than switching frequency of the power converter 620 when in active operation.

The processing circuitry 802 may be configured to trigger activation and deactivation of the operation of the power converter 620 during at least one of discharging and charging period of a power source comprised in the energy storage system 600.

The processing circuitry 802 may be configured to trigger turning on and off the power of the power converter 620 to activate and deactivate the operation of the power converter 620.

The processing circuitry may be configured to trigger switching off all transistors comprised in the power converter 620 to deactivate the operation of the power converter 620.

The power converter 620 may be operating with Pulse Width Modulation (PWM) or Space Vector Modulation. The processing circuitry 802 may be configured to define the predefined controlling frequency which is lower than the frequency of the Pulse Width Modulation (PWM) or Space Vector Modulation, or the duty cycle of the predefined controlling frequency which is larger than the duty cycle of the Pulse Width Modulation (PWM) or Space Vector Modulation.

The processing circuitry 802 may be configured to define the controlling frequency to achieve in average a desired operating power of the power converter when the energy storage system is at partial load operation, i.e. when the ESS is operating at less than its full capacity or designed load.

The processing circuitry 802 may be configured to vary at least one of a pattern to activate and deactivate the operation of the power converter, the controlling frequency and a duty cycle depending on a desired average operating power of the power converter.

The processing circuitry 802 may be configured to define the predefined controlling frequency based on application of the power converter.

Further details of the computer system **800** illustrated in **Fig. 8** will be provided later.

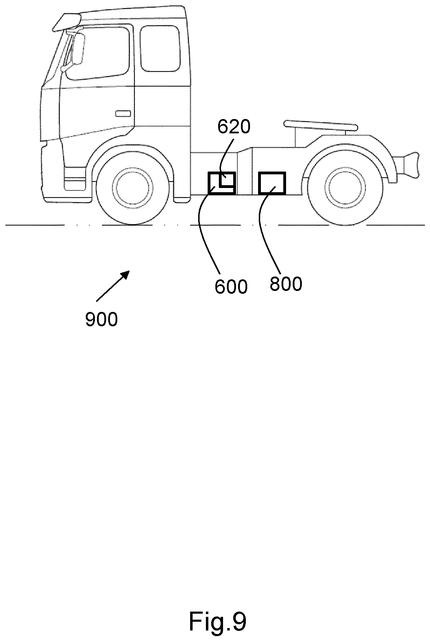

The method and system for controlling operation of a power converter 620 comprised in an energy storage system 600 may be implemented in any electrical energy storage system in different applications, such as renewable energy integration, grid stability and load balancing, backup power supply, electric vehicles etc. **Fig.9** shows a vehicle 900 comprising an energy storage system 600 comprising a power source 610, a power converter 620 comprising any one or a combination of a DC/AC inverter, a DC/DC converter, an AC/DC inverter and a computer system 800 configured to control the operation of the power converter 620 to improve efficiency and lifetime of the energy storage system 600.

The computer system **800** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **800** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

Going back to Fig. 8, the computer system **800** may comprise at least one computing device or electronic device capable of including firmware, hardware, and/or executing software instructions to implement the functionality described herein. The computer system **800** may include the processing circuitry **802** (e.g., processing circuitry including one or more processor devices or control units), a memory **804,** and a system bus **806.** The computer system **800** may include at least one computing device having the processing circuitry **802.** The system bus **806** provides an interface for system components including, but not limited to, the memory **804** and the processing circuitry **802.** The processing circuitry **802** may include any number of hardware components for conducting data or signal processing or for executing computer code stored in memory **804.** The processing circuitry **802** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **802** may further include computer executable code that controls operation of the programmable device.

The system bus **806** may be any of several types of bus structures that may further interconnect to a memory bus (with or without a memory controller), a peripheral bus, and/or a local bus using any of a variety of bus architectures. The memory **804** may be one or more devices for storing data and/or computer code for completing or facilitating methods described herein. The memory **804** may include database components, object code components, script components, or other types of information structure for supporting the various activities herein. Any distributed or local memory device may be utilized with the systems and methods of this description. The memory **804** may be communicably connected to the processing circuitry **802** (e.g., via a circuit or any other wired, wireless, or network connection) and may include computer code for executing one or more processes described herein. The memory **804** may include non-volatile memory **808** (e.g., read-only memory (ROM), erasable programmable read-only memory (EPROM), electrically erasable programmable read-only memory (EEPROM), etc.), and volatile memory **810** (e.g., random-access memory (RAM)), or any other medium which can be used to carry or store desired program code in the form of machine-executable instructions or data structures and which can be accessed by a computer or other machine with processing circuitry **802.** A basic input/output system (BIOS) **812** may be stored in the non-volatile memory **808** and can include the basic routines that help to transfer information between elements within the computer system **800.**

The computer system **800** may further include or be coupled to a non-transitory computer-readable storage medium such as the storage device **814,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **814** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **814** and/or in the volatile memory **810,** which may include an operating system **816** and/or one or more program modules **818.** All or a portion of the examples disclosed herein may be implemented as a computer program **820** stored on a transitory or non-transitory computer-usable or computer-readable storage medium (e.g., single medium or multiple media), such as the storage device **814,** which includes complex programming instructions (e.g., complex computer-readable program code) to cause the processing circuitry **802** to carry out actions described herein. Thus, the computer-readable program code of the computer program **820** can comprise software instructions for implementing the functionality of the examples described herein when executed by the processing circuitry **802.** In some examples, the storage device **814** may be a computer program product (e.g., readable storage medium) storing the computer program **820** thereon, where at least a portion of a computer program **820** may be loadable (e.g., into a processor) for implementing the functionality of the examples described herein when executed by the processing circuitry **802.** The processing circuitry **802** may serve as a controller or control system for the computer system **800** that is to implement the functionality described herein.

The computer system **800** may include an input device interface **822** configured to receive input and selections to be communicated to the computer system **800** when executing instructions, such as from a keyboard, mouse, touch-sensitive surface, etc. Such input devices may be connected to the processing circuitry **802** through the input device interface **822** coupled to the system bus **806** but can be connected through other interfaces, such as a parallel port, an Institute of Electrical and Electronic Engineers (IEEE) 1394 serial port, a Universal Serial Bus (USB) port, an IR interface, and the like. The computer system **800** may include an output device interface **824** configured to forward output, such as to a display, a video display unit (e.g., a liquid crystal display (LCD) or a cathode ray tube (CRT)). The computer system **800** may include a communications interface **826** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

**Some examples are listed below:**
1. A computer system (800) comprising processing circuitry (802) configured to control operation of a power converter (620) comprised in an energy storage system (600), the processing circuitry (802) is configured to:
   trigger activation and deactivation of the operation of the power converter (620) periodically at a predefined controlling frequency with a duty cycle; wherein
   the predefined controlling frequency is lower than switching frequency of the power converter (620) when in active operation.
2. The computer system (800) according to Example 1, wherein the processing circuitry (802) is configured to trigger activattion and deactivation of the operation of the power converter (620) during at least one of discharging and charging period of a power source comprised in the energy storage system (600).
3. The computer system (800) according any one of Examples 1-2, wherein the processing circuitry (802) is configured to trigger turning on and off the power of the power converter (620) to activate and deactivate the operation of the power converter (620).
4. The computer system (800) according to any one of Examples 1-2, wherein the processing circuitry (802) is configured to trigger switching off all transistors comprised in the power converter to deactivate the operation of the power converter (620).
5. The computer system (800) according to any one of Examples 1-4, wherein the power converter (620) is operating with Pulse Width Modulation (PWM) or Space Vector Modulation.
6. The computer system (800) according to Example 5, wherein the predefined controlling frequency is lower than the frequency of the Pulse Width Modulation (PWM) or Space Vector Modulation.
7. The computer system according to Example 5, wherein the duty cycle of the predefined controlling frequency is larger than the duty cycle of the Pulse Width Modulation (PWM) or Space Vector Modulation.
8. The computer system according to any one of Examples 1-7, wherein the predefined controlling frequency is defined to achieve in average a desired operating power of the power converter when the energy storage system is at partial load operation.
9. The computer system according to any one of Examples 1-8, wherein at least one of a pattern to activate and deactivate the operation of the power converter, the controlling frequency and a duty cycle is varied depending on a desired average operating power of the power converter (620).
10. The computer system according to any one of Examples 1-9, wherein the predefined controlling frequency is defined based on application of the power converter (620).
11. The computer system according to Example 10, wherein the predefined controlling frequency is between at least one of 0.001 Hz-40Hz, 0.001 Hz-2000 Hz, 2 KHz-5 KHz, 5 KHz-20 KHz.
12. A vehicle (900) comprises a computer system (800) according to any one of Examples 1-11.
13. The vehicle (900) according to Example 12, further comprising an energy storage system (600) comprising a power source (610), a power converter (620) comprising any one or a combination of a DC/AC inverter, a DC/DC converter, an AC/DC inverter.
14. A computer-implemented method for controlling operation of a power converter (620) comprised in an energy storage system (600), the method comprising:
   activating and deactivating (710), by a processing circuitry of a computer system, the operation of the power converter (620) periodically at a predefined controlling frequency with a duty cycle; wherein the predefined controlling frequency is lower than switching frequency of the power converter (620) when in active operation.
15. The method according to Example 14, wherein activating and deactivating (710) comprises deactivating (711), by a processing circuitry of a computer system, the operation of the power converter (620) by turning off the power of the power converter (620).
16. The method according to Example 14, wherein activating and deactivating (710) comprises deactivating (711), by a processing circuitry of a computer system, the operation of the power converter (620) by switching off all switching transistors in the power converter (620).
17. The method according to any one of Examples 14-16, wherein activating and deactivating (710) the operation of the power converter (620) is performed during at least one of discharging or charging period of a power source (610) comprised in the energy storage system (600).
18. The method according to any one of Examples 14-17, further comprising varying at least one of activating and deactivating pattern, the controlling frequency and duty cycle depending on a desired average operating power of the power converter (620).
19. A computer program product comprising program code for performing, when executed by the processing circuitry (802), the method of any of Examples 14-18.
20. A non-transitory computer-readable storage medium comprising instructions, which when executed by a processing circuitry (802) of a computer system (800), cause the processing circuitry (802) to perform the method of any of Examples 14-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (800) comprising processing circuitry (802) configured to control operation of a power converter (620) comprised in an energy storage system (600), the processing circuitry (802) is configured to:
trigger activation and deactivation of the operation of the power converter (620) periodically at a predefined controlling frequency with a duty cycle; wherein
the predefined controlling frequency is lower than switching frequency of the power converter (620) when in active operation.

2. The computer system (800) according to claim 1, wherein the processing circuitry (802) is configured to trigger activation and deactivation of the operation of the power converter (620) during at least one of discharging and charging period of a power source comprised in the energy storage system (600).

3. The computer system (800) according any one of claims 1-2, wherein the processing circuitry (802) is configured to trigger turning on and off the power of the power converter (620) to activate and deactivate the operation of the power converter (620).

4. The computer system (800) according to any one of claims 1-2, wherein the processing circuitry is configured to trigger switching off all transistors comprised in the power converter (620) to deactivate the operation of the power converter (620).

5. The computer system (800) according to any one of claims 1-4, wherein the power converter (620) is operating with Pulse Width Modulation, PWM, or Space Vector Modulation, and wherein the predefined controlling frequency is lower than a frequency of the PWM, or Space Vector Modulation, or the duty cycle of the predefined controlling frequency is larger than the duty cycle of the PWM or Space Vector Modulation.

6. The computer system (800) according to any one of claims 1-5, wherein the predefined controlling frequency is defined to achieve in average a desired operating power of the power converter (620) when the energy storage system is at partial load operation.

7. The computer system (800) according to any one of claims 1-5, wherein at least one of a pattern to activate and deactivate the operation of the power converter (620), the controlling frequency and a duty cycle is varied depending on a desired average operating power of the power converter (620).

8. The computer system (800) according to any one of claims 1-7, wherein the predefined controlling frequency is defined based on application of the power converter (620).

9. A vehicle (900) comprises a computer system (800) according to any one of claims 1-8.

10. The vehicle (900) according to claim 9, further comprising an energy storage system (600) comprising a power source (610), a power converter (620) comprising any one or a combination of a DC/AC inverter, a DC/DC converter, an AC/DC inverter.

11. A computer-implemented method for controlling operation of a power converter (620) comprised in an energy storage system (600), the method comprising:
activating and deactivating (710), by a processing circuitry (802) of a computer system (800), the operation of the power converter (620) periodically at a predefined controlling frequency with a duty cycle; wherein the predefined controlling frequency is lower than switching frequency of the power converter (620) when in active operation.

12. The method according to claim 11, wherein activating and deactivating (710) comprises deactivating (711), by a processing circuitry (802) of a computer system (800), the operation of the power converter (620) by turning off the power of the power converter (620).

13. The method according to claim 12, wherein activating and deactivating (710) comprises deactivating (711), by a processing circuitry (802) of a computer system (800), the operation of the power converter (620) by switching off all switching transistors in the power converter (620).

14. A computer program product comprising program code for performing, when executed by a processing circuitry (802) of a a computer system (800), the method of any of claims 11-13.

15. A non-transitory computer-readable storage medium comprising instructions, which when executed by a processing circuitry (802) of a computer system (800), cause the processing circuitry (802) to perform the method of any of claims 11-13.

## Amended claims

### Amended claims in accordance with Rule 137(2) EPC.

1. A computer system (800) comprising processing circuitry (802) configured to control operation of a power converter (620) comprised in an energy storage system (600), the processing circuitry (802) is configured to:
trigger activation and deactivation of the operation of the power converter (620) periodically at a predefined controlling frequency with a duty cycle during at least one of discharging and charging period of a power source comprised in the energy storage system (600); wherein
the predefined controlling frequency is lower than switching frequency of the power converter (620) when in active operation.

2. The computer system (800) according claim 1, wherein the processing circuitry (802) is configured to trigger turning on and off the power of the power converter (620) to activate and deactivate the operation of the power converter (620).

3. The computer system (800) according to claim 1, wherein the processing circuitry is configured to trigger switching off all transistors comprised in the power converter (620) to deactivate the operation of the power converter (620).

4. The computer system (800) according to any one of claims 1-3, wherein the power converter (620) is operating with Pulse Width Modulation, PWM, or Space Vector Modulation, and wherein the predefined controlling frequency is lower than a frequency of the PWM, or Space Vector Modulation, or the duty cycle of the predefined controlling frequency is larger than the duty cycle of the PWM or Space Vector Modulation.

5. The computer system (800) according to any one of claims 1-4, wherein the predefined controlling frequency is defined to achieve in average a desired operating power of the power converter (620) when the energy storage system is at partial load operation.

6. The computer system (800) according to any one of claims 1-4, wherein at least one of a pattern to activate and deactivate the operation of the power converter (620), the controlling frequency and a duty cycle is varied depending on a desired average operating power of the power converter (620).

7. The computer system (800) according to any one of claims 1-6, wherein the predefined controlling frequency is defined based on application of the power converter (620).

8. A vehicle (900) comprises a computer system (800) according to any one of claims 1-7.

9. The vehicle (900) according to claim 8, further comprising an energy storage system (600) comprising a power source (610), a power converter (620) comprising any one or a combination of a DC/AC inverter, a DC/DC converter, an AC/DC inverter.

10. A computer-implemented method for controlling operation of a power converter (620) comprised in an energy storage system (600), the method comprising:
activating and deactivating (710), by a processing circuitry (802) of a computer system (800), the operation of the power converter (620) periodically at a predefined controlling frequency with a duty cycle during at least one of discharging and charging period of a power source comprised in the energy storage system (600); wherein the predefined controlling frequency is lower than switching frequency of the power converter (620) when in active operation.

11. The method according to claim 10, wherein activating and deactivating (710) comprises deactivating (711), by a processing circuitry (802) of a computer system (800), the operation of the power converter (620) by turning off the power of the power converter (620).

12. The method according to claim 11, wherein activating and deactivating (710) comprises deactivating (711), by a processing circuitry (802) of a computer system (800), the operation of the power converter (620) by switching off all switching transistors in the power converter (620).
